# EUROPÄISCHE PATENTSCHRIFT

(11) **EP 2 142 909 B1**
(45) Veröffentlichungstag und Bekanntmachung des Hinweises auf die Patenterteilung: **26.08.2015**
(21) Anmeldenummer: 08749753.3
(22) Anmeldetag: 25.04.2008
(51) Int. Cl.: G01N 21/3504, G01N 21/3518, G01N 21/37, G01N 21/61

(54) **DETEKTORANORDNUNG FÜR EINEN NICHTDISPERSIVEN INFRAROT-GASANALYSATOR UND VERFAHREN ZUM NACHWEIS EINER MESSGASKOMPONENTE IN EINEM GASGEMISCH MITTELS EINES SOLCHEN GASANALYSATORS**
DETECTOR ARRANGEMENT FOR A NONDISPERSIVE INFRARED GAS ANALYSER AND METHOD FOR THE DETECTION OF A MEASURING GAS COMPONENT IN A GAS MIXTURE BY MEANS OF SUCH A GAS ANALYSER
SYSTÈME DE DÉTECTEUR POUR ANALYSEUR DE GAZ À INFRAROUGE NON DISPERSIF ET PROCÉDÉ DE DÉTECTION D'UN COMPOSANT GAZEUX À MESURER DANS UN MÉLANGE DE GAZ AU MOYEN D'UN TEL ANALYSEUR DE GAZ

(30) Priorität: 02.05.2007 DE 102007020596; 30.07.2007 DE 102007035711
(43) Veröffentlichungstag der Anmeldung: 13.01.2010
(73) Patentinhaber: Siemens Aktiengesellschaft, 80333 München (DE)
(72) Erfinder: BITTER, Ralf, 76185 Karlsruhe - Mühlburg (DE); HÖRNER, Thomas, 76135 Karlsruhe (DE); HEFFELS, Camiel, 76297 Stutensee-büchig (DE)
(86) Internationale Anmeldenummer: PCT/EP2008/055100
(87) Internationale Veröffentlichungsnummer: WO 2008/135416

(56) Entgegenhaltungen:
- WO-A-92/07326
- WO-A-2005/078413
- DE-B- 1 109 418
- DE-C1- 19 518 322
- DE-C1- 19 949 439
- DE-U1- 9 014 162
- JP-A- 9 101 259
- MARIS M A ET AL: "NONLINEAR MULTICOMPONENT ANALYSIS BY INFRARED SPECTROPHOTOMETRY" ANALYTICAL CHEMISTRY, AMERICAN CHEMICAL SOCIETY. COLUMBUS, US, Bd. 55, Nr. 11, 1. September 1983 (1983-09-01), Seiten 1694-1703, XP002000075 ISSN: 0003-2700
- THOMAS E V ET AL: "COMPARISON OF MULTIVARIATE CALIBRATION METHODS FOR QUANTITATIVE SPECTRAL ANALYSIS" ANALYTICAL CHEMISTRY, AMERICAN CHEMICAL SOCIETY. COLUMBUS, US, Bd. 62, Nr. 10, 15. Mai 1990 (1990-05-15), Seiten 1091-1099, XP000163065 ISSN: 0003-2700

## Beschreibung

Detektoranordnung für einen nichtdispersiven Infrarot-Gasanalysator und Verfahren zum Nachweis einer Messgaskomponente in einem Gasgemisch mittels eines solchen Gasanalysators

Die Erfindung betrifft entsprechend dem Oberbegriff von Anspruch 1 eine Detektoranordnung für einen nichtdispersiven Infrarot-(NDIR-)Gasanalysator zum Nachweis einer Messgaskomponente in einem Gasgemisch, mit einem ersten Einschichtempfänger und mindestens einem weiteren Einschichtempfänger, die hintereinander im Strahlengang des Gasanalysators liegen, wobei der erste Einschichtempfänger die Messgaskomponente oder ein sich spektral mit der Messgaskomponente überlagerndes Gas und der mindestens eine weitere Einschichtempfänger ein Quergas, die Messgaskomponente - auch in einer anderen Konzentration als der erste Einschichtempfänger - oder ein sich spektral mit der Messgaskomponente überlagerndes Gas enthält, und mit einer Auswerteeinrichtung zur Ermittlung der Konzentration der Messgaskomponente in dem Gasgemisch aus von z. B. druck- oder strömungsempfindlichen Sensoren der Einschichtempfänger gelieferten Signalen.

Die Erfindung betrifft ferner ein Verfahren zum Nachweis einer Messgaskomponente in einem Gasgemisch mittels eines nichtdispersiven Infrarot-(NDIR-)Gasanalysators entsprechend dem Oberbegriff von Anspruch 4.

Ein derartiger, aus der DE-AS 1 109 418 bekannter Gasanalysator weist eine Detektoranordnung mit zwei hintereinander liegenden Einschichtempfängern auf, die beide mit der Messgaskomponente gefüllt sind, wobei der Partialdruck der Messgaskomponente in dem ersten Einschichtempfänger niedriger als in dem zweiten Einschichtempfänger gewählt ist. Alternativ enthalten die beiden Einschichtempfänger unterschiedliche Gasfüllungen, wobei z. B. zur Messung von Methan in Gegenwart von Wasserdampf der erste Einschichtempfänger mit der Messgaskomponente Methan und der weitere Einschichtempfänger mit Ammoniak als Ersatz für das Quergas Wasserdampf gefüllt ist. Die Einschichtempfänger weisen jeweils eine im Strahlengang des Gasanalysators liegende aktive Detektorkammer und eine mit ihr über eine Verbindungsleitung verbundene passive Ausgleichskammer außerhalb des Strahlengangs auf, die einen Membrankondensator als druckempfindlichen Sensor enthält. Alternativ kann ein strömungsempfindlicher Sensor in der Verbindungsleitung angeordnet werden, so wie dies z. B. aus J. Staab: "Industrielle Gasanalyse", Oldenbourg, 1994, Seiten 167f und 172f bekannt ist.

Bei der aus der DE-AS 1 109 418 bekannten Detektoranordnung werden die von den Sensoren der beiden Einschichtempfänger gelieferten Signale einer Auswerteschaltung zugeführt, die als Kompensationsschaltung ausgebildet ist und das Verhältnis beider Signale bildet. Unter der Voraussetzung, dass die Gasfüllung des zweiten Einschichtempfängers in Bezug auf Zusammensetzung und/oder Druck derart gewählt ist, dass das Absorptionsgebiet dieses zweiten Einschichtempfängers das schmalere Absorptionsgebiet des ersten Einschichtempfängers breit überdeckt, wird erreicht, dass das Sensorsignal des zweiten Einschichtempfängers, welches nur auf dem Einfluss der in dem ersten Einschichtempfänger nicht absorbierten Strahlung beruht und daher auf die Komponente des breiten Absorptionsbereichs zurückgeht, denjenigen Anteil in dem Sensorsignal des ersten Einschichtempfängers kompensiert, der gerade von dieser überdeckenden Komponente des breiten Absorptionsbereichs in dem ersten Einschichtempfänger herrührt.

Der Erfindung liegt die Aufgabe zugrunde, eine Kompensation des Einflusses von Quergasen auf das Messergebnis zu ermöglichen, ohne dass die oben genannte Voraussetzung erfüllt sein muss.

Gemäß der Erfindung wird die Aufgabe durch die Merkmale des Anspruchs 1 gelöst, indem bei der Detektoranordnung der eingangs angegebenen Art die Auswerteeinrichtung eine entsprechend der Anzahl n der Einschichtempfänger n-dimensionale Kalibrationsmatrix enthält, in der bei unterschiedlichen bekannten Konzentrationen der Messgaskomponente in Anwesenheit von unterschiedlichen bekannten Quergaskonzentrationen erhaltene Signalwerte der Sensoren als n-Tupel abgespeichert sind, und indem die Auswerteeinrichtung dazu ausgebildet ist, beim Messen von unbekannten Konzentrationen der Messgaskomponente in Anwesenheit von unbekannten Quergaskonzentrationen durch Vergleich der dabei erhaltenen n-Tupel von Signalwerten mit den in der Kalibrationsmatrix abgespeicherten n-Tupeln von Signalwerten die Konzentration der Messgaskomponente zu ermitteln.

Bezüglich des eingangs genannten Verfahrens wird die Aufgabe durch die Merkmale des Anspruchs 4 gelöst.

Vorteilhafte Weiterbildungen der erfindungsgemäßen Detektoranordnung und des erfindungsgemäßen Verfahrens sind in den Unteransprüchen angegeben.

Das Sensorsignal eines jeden Einschichtempfängers enthält neben dem durch die Strahlungsabsorption in dem eigenen Einschichtempfänger erzeugten hauptsächlichen Signalanteil auch geringere Signalanteile aus den jeweils anderen Einschichtempfängern. Die Sensorsignale von n Einschichtempfängern bilden daher eine n-dimensionale Ergebnismatrix. Enthält der erste Einschichtempfänger die Messgaskomponente und sind die nachgeordneten n-1 Einschichtempfänger mit unterschiedlichen Quergasen gefüllt, so lässt sich die Konzentration einer Messgaskomponente auch in Anwesenheit der Quergase in unterschiedlichen Konzentrationen ermitteln. Dazu werden entsprechend der Erfindung zunächst die bei verschiedenen bekannten Konzentrationen der Messgaskomponente in Anwesenheit von verschiedenen bekannten Konzentrationen der n-1 unterschiedlichen Quergase erhaltenen Signalwerte als n-Tupel zusammen mit dem jeweiligen bekannten Konzentrationswert der Messgaskomponente in einer Kalibrationsmatrix abgespeichert. Soll dann später eine unbekannte Konzentration der Messgaskomponente in Anwesenheit der Quergase, deren Konzentrationen ebenfalls unbekannt sind, ermittelt werden, so werden die dabei erhaltenen n-Tupel von Signalwerten mit den in der Kalibrationsmatrix abgespeicherten n-Tupeln von Signalwerten verglichen und der entsprechende Konzentrationswert der Messgaskomponente aus der Kalibrationsmatrix ermittelt.

Ist der mindestens eine weitere Einschichtempfänger mit einem Quergas gefüllt, kann durch Vergleich der beim Messen von unbekannten Konzentrationen der Messgaskomponente in Anwesenheit von unbekannten Quergaskonzentrationen erhaltenen n-Tupel von Signalwerten mit den in der Kalibrationsmatrix abgespeicherten n-Tupeln von Signalwerten auch die Konzentration der jeweiligen Quergaskomponente ermittelt werden.

Für die Erstellung der Kalibrationsmatrix reicht eine begrenzte Anzahl von Messungen mit bekannten Konzentrationen der Messgaskomponente in Anwesenheit von bekannten Konzentrationen der Quergase aus, um eine Reihe von Stützwerten zu erhalten, von denen ausgehend die Kalibrationsmatrix mittels eines Simulationsprogramms beispielsweise durch Interpolation der Stützwerte bzw. Extrapolation komplettiert wird. Der Begriff Kalibrationsmatrix umfasst hier auch die beschreibenden mathematischen Funktionen und ihre Parameter, wie beispielsweise mit Hilfe von Polynomen.

Die allgemeine Anwendbarkeit der Erfindung wird nur durch die Dynamikbereiche der jeweiligen Gase eingeschränkt. In der Praxis müssen daher sowohl der Dynamikbereich der Messgaskomponente als auch die Dynamikbereiche der Quergase durch die entsprechende Auslegung des Gasanalysators (Strahler, Länge der verwendeten Küvetten und Detektorkammern) an die Anforderungen angepasst werden.

Alternativ zur Füllung der weiteren Einschichtempfänger mit Quergasen können diese auch mit der Messgaskomponente gefüllt werden. Dies kann mit unterschiedlichen Konzentrationen geschehen, wobei die Konzentration in dem ersten Einschichtempfänger vorzugsweise am geringsten ist. Dabei werden, nicht wie oben, die Quergase direkt, sondern lediglich ihr Einfluss auf die Messung der Konzentration der Messgaskomponente bestimmt. Dadurch sind Quergaseinflüsse direkt mit der notwendigen Genauigkeit der Messgaskomponente kompensierbar, ohne dass die Dynamikbereiche der Quergase berücksichtigt werden müssen. Durch die Absorption in dem ersten Einschichtempfänger wird ein Signal erzeugt, das sowohl Informationen über die Messgaskomponente als auch über die anwesenden Quergase enthält. Ein Effekt der Absorption in dem ersten Einschichtempfänger ist aber auch, dass die verschiedenen Wellenlängenanteile der Strahlung unterschiedlich gewichtet werden, wobei die wellenlängenabhängige Wichtung dem Transmissionsverhalten der Messgaskomponente entspricht. In dem folgenden Einschichtempfänger wird diese wellenlängengewichtete Strahlung nun erneut integral erfasst, so dass es möglich ist, zwischen unterschiedlichen spektralen Formen und damit unterschiedlichen Konzentrationen von Quergasen zu unterscheiden. Es entsteht also auch hier eine n-dimensionale Ergebnismatrix, die über die jeweils n erhaltenen Signalwerte zur genauen Messgaskonzentration führt und den Quergaseinfluss kompensiert.

Da in realen Mess-Situationen die relevanten Quergase und die Größenordnung ihrer Konzentrationen bekannt sind, kann ausgehend von den zu erwartenden Quergaskonzentrationen und ihren Schwankungsbreiten ein Korridor in der Kalibrationsmatrix festgelegt werden. Beim Messen von unbekannten Konzentrationen der Messgaskomponente in Anwesenheit der zu erwartenden Quergaskonzentrationen kann dann ein Fehler signalisiert werden, wenn die erhaltenen n-Tupel von Signalwerten außerhalb des Korridors liegen.

Die Lage der n-Tupel von Signalwerten innerhalb der Kalibrationsmatrix ist allgemein von verschiedenen mess- und/oder gerätespezifischen Parametern abhängig, zu denen neben den oben genannten Konzentrationen der Messgaskomponente und der zu erwartenden Quergaskomponenten auch andere Parameter zählen, wie z. B. Veränderungen der Strahlungsleistung des Infrarot-Strahlers, Verschmutzungen im Strahlungsweg oder die Absorptionseigenschaften von unerwartet in das Messsystem eindringenden Gasen oder sogar mechanische Beschädigungen an den Fenstern der Messküvette. Der Einfluss solcher weiterer Parameter lässt sich in vorteilhafter Weise vorab bestimmen, indem sie bei Konstanthaltung der übrigen mess- und/oder gerätespezifischen Parameter variiert werden und dabei die Richtung ermittelt wird, in der die n-Tupel der erhaltenen Signalwerte innerhalb der Kalibrationsmatrix variieren. So kann z. B. bei Konstanthaltung der Quergaskonzentrationen die Intensität der erzeugten Strahlung variiert werden, um den Einfluss von durch Alterung des Infrarot-Strahlers oder Verschmutzungen der Messküvette hervorgerufenen wellenlängenunabhängigen Transmissionsänderungen auf das Messergebnis zu ermitteln. Ebenso kann bei Konstanthaltung der Konzentrationen bestimmter Quergase die Konzentration eines weiteren Quergases variiert werden, um dessen Einfluss auf das Messergebnis zu ermitteln.

Wenn mehrere der genannten Parameter gleichzeitig wirksam sind, ist es nicht ohne weiteres möglich zu ermitteln, welcher Parameter für Positionsänderungen der bei der Messung erhaltenen n-Tupel ursächlich ist. Wie oben bereits erwähnt, kann jedoch für reale Mess-Situationen ausgehend von den zu erwartenden Quergaskonzentrationen und ihren Schwankungsbreiten ein Korridor in der Kalibrationsmatrix festgelegt werden, außerhalb dessen die betreffenden Quergase und ihre Konzentrationen als nicht störend angenommen werden können. Wenn sich daher die bei einer Messung erhaltenen n-Tupel von Signalwerten aus dem Korridor heraus bewegen, reduziert sich die Anzahl der Parameter, die als ursächlich für die Bewegung der n-Tupel angesehen werden können. Beispielsweise kann dann anhand der Richtung der Bewegung der n-Tupel ermittelt werden, ob die Ursache dafür in einer Änderung der wellenlängenunabhängigen Transmission (Änderung der Strahlungsintensität oder Verschmutzung der Küvetten) oder im Auftreten eines unerwarteten Quergases liegt.

Zur weiteren Erläuterung der Erfindung wird im Folgenden auf die Figuren der Zeichnung Bezug genommen; im Einzelnen zeigen:
- Figur 1: ein Ausführungsbeispiel eines NDIR-Gasanalysators in Einstrahl-Ausführung,
- Figur 2: ein Beispiel eines NDIR-Gasanalysators in Zweistrahl-Ausführung,
- Figur 3: ein Beispiel für die Kalibrationsmatrix und
- Figur 4: ein Beispiel für die erfindungsgemäße Detektoranordnung.

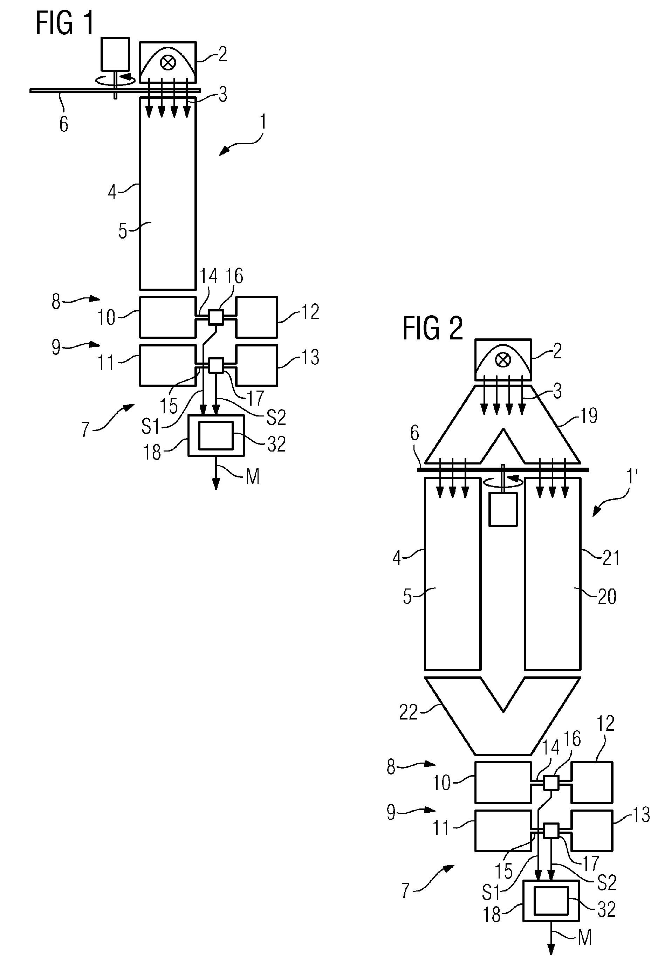

Figur 1 zeigt einen NDIR-Gasanalysator 1 in Einstrahl-Ausführung mit einem Infrarot-Strahler 2, der eine Messstrahlung 3 erzeugt. Die Messstrahlung 3 durchstrahlt eine Messküvette 4, die ein Gasgemisch 5 mit einer Messgaskomponente enthält, deren Konzentration zu bestimmen ist. Dabei wird die Messstrahlung 3 mittels eines zwischen dem Infrarot-Strahler 2 und der Messküvette 4 angeordneten rotierenden Modulatorrads (Chopper, Zerhacker) 6 moduliert. Nach Durchstrahlen der Messküvette 4 fällt die Messstrahlung 3 auf eine Detektoranordnung 7, bestehend aus einem ersten Einschichtempfänger 8 und einem nachgeordneten weiteren Einschichtempfänger 9. Jeder der beiden Einschichtempfänger 8, 9 weist jeweils eine im Strahlengang 3 des Gasanalysators 1 liegende aktive Detektorkammer 10 bzw. 11 und außerhalb des Strahlengangs 3 eine passive Ausgleichskammer 12 bzw. 13 auf, die über eine Verbindungsleitung 14 bzw. 15 mit einem darin angeordneten druck- oder strömungsempfindlichen Sensor 16 bzw. 17 miteinander verbunden sind. Die Sensoren 16 und 17 erzeugen Signale S1 und S2, aus denen in einer Auswerteeinrichtung 18 als Messergebnis M die Konzentration der Messgaskomponente in dem Gasgemisch 5 ermittelt wird.

Der in Figur 2 gezeigte NDIR-Gasanalysator 1' unterscheidet sich von dem nach Figur 1 durch einen Zweistrahl-Aufbau. Mittels eines Strahlteilers 19 (sog. Hosenkammer) wird die von dem Infrarot-Strahler 2 erzeugte Messstrahlung 3 auf einen Messstrahlengang durch die das Gasgemisch 5 mit der Messgaskomponente enthaltende Messküvette 4 und einen Vergleichsstrahlengang durch eine mit einem Vergleichsgas 20 gefüllte Vergleichsküvette 21 aufgeteilt. Hinter der Messküvette 4 und der Vergleichsküvette 21 werden der Messstrahlengang und der Vergleichsstrahlengang mittels eines Strahlungssammlers 22 wieder zusammengeführt und gelangen anschließend in die unter Bezug auf Figur 1 bereits beschriebene Detektoranordnung 7.

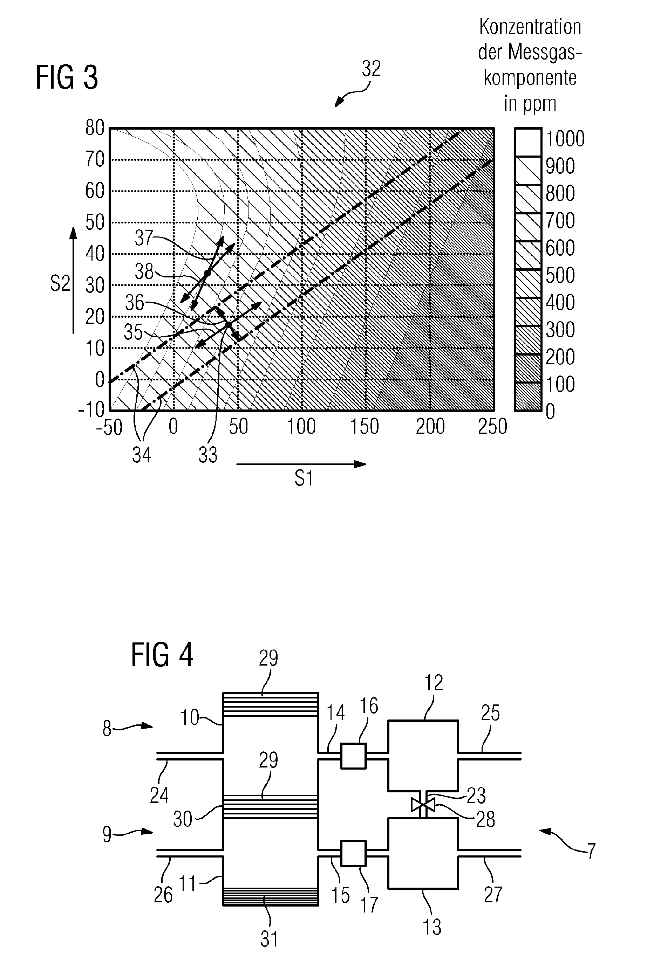

Die Auswerteeinrichtung 18 enthält eine Kalibrationsmatrix 32, die in Figur 3 im Detail dargestellt ist und anhand derer im Folgenden die Funktionsweise der Detektoranordnung 7 näher erläutert wird.

In die Messküvette 4 werden nacheinander verschiedene Quergaskonzentrationen mit verschiedenen Konzentrationen der Messgaskomponente eingeführt. Für jede zur Verfügung stehende Konzentration wird ein Wertepaar (2-Tupel) 33 der Signale S1 und S2 gemessen, so wie dies beispielhaft in der nachfolgenden Tabelle dargestellt ist. Aus den aufgenommenen Wertepaaren der Signale S1 und S2 und den zugehörigen bekannten Konzentrationswerten der Messgaskomponente wird die Kalibrationsmatrix 32 erstellt, wobei Zwischenwerte durch Interpolation der aufgenommenen bzw. bekannten Stützwerte gebildet werden. Die Kalibrationsmatrix 32 kann auch in Form einer sie beschreibenden mathematischen Funktion und der zugehörigen Funktionsparameter in der Auswerteeinrichtung 18 hinterlegt sein, wie beispielsweise mit Hilfe von Polynomen. Eine reduzierte Messreihe gemäß der Tabelle kann für die Erstellung der Kalibrationsmatrix 32 ausreichen.

| Messgaskomponente in ppm | Quergaskomponente in ppm | S1 | S2 |
|---|---|---|---|
| 0 (Nullgas) | 0 | ... | ... |
| 0 | 5000 | ... | ... |
| 0 | 10000 | ... | ... |
| 0 | 15000 | ... | ... |
| 500 (mittlere Konzentration) | 0 | ... | ... |
| 500 | 5000 | ... | ... |
| 500 | 10000 | ... | ... |
| 500 | 15000 | ... | ... |
| 1000 (Endwertgas) | 0 | ... | ... |
| 1000 | 5000 | ... | ... |
| 1000 | 10000 | ... | ... |
| 1000 | 15000 | ... | ... |

Für reale Mess-Situationen sind in der Regel die Quergase und die zu erwartenden Schwankungsbreiten ihrer Konzentrationen (z. B. minimal 5000 ppm bis maximal 15000 ppm) bekannt, so dass in der Kalibrationsmatrix 32 ein Korridor 34 festgelegt werden kann, innerhalb dessen die von den Konzentrationen der Messgaskomponente und der bekannten Quergase abhängigen n-Tupel 33 im Normalfall liegen werden. Bei veränderlichen Konzentrationen der Messgaskomponente bewegen sich die n-Tupel 33 in der mit 35 bezeichneten Richtung und bei den zu erwartenden veränderlichen Konzentrationen der Quergase in der mit 36 bezeichneten Richtung. Diesen Bewegungsrichtungen 35 und 36 können andere Bewegungsrichtungen überlagert sein, die aus Schwankungen weiterer mess- und/oder gerätespezifischer Parameter, z. B. der Leistung des Infrarot-Strahlers 2 oder Verschmutzung der Messküvette 4, resultieren. Bewegt sich ein n-Tupel 33 aus dem Korridor 34 heraus, so deutet dies auf eine Störung hin. Da außerhalb des Korridors 34 der Einfluss der bekannten Quergase gegenüber dem der weiteren Parameter vernachlässigbar ist, kann aus der weiteren Bewegungsrichtung 37 oder 38 des n-Tupels auf den jeweiligen Parameter, z. B. Änderung der Strahlungsleistung oder unbekanntes Quergas, geschlossen werden.

Um bei dem in Figur 2 gezeigten Gasanalysator mit Zweistrahl-Aufbau in der oben genannten Weise alle Fehler oder Störungen in den von der Mess- und Vergleichsstrahlung gemeinsam durchlaufenen Teilen des Strahlengangs (Infrarot-Strahler 2, Strahlteiler 19, Strahlungssammler 22, Detektoranordnung 7) zu erkennen, erfolgt die Einkopplung der Strahlung 3 in den Mess- und Vergleichsstrahlengang vorzugsweise asymmetrisch, z. B. im Verhältnis 55 % zu 45 %. Dadurch wird zwar der Vorteil des Zweistrahl-Aufbaus in Bezug auf die feste Nullpunkteinstellung vermindert, jedoch können andererseits Fehler erkannt werden, die sonst nicht identifizierbar wären.

Figur 4 zeigt schließlich ein Ausführungsbeispiel der erfindungsgemäßen Detektoranordnung 7, das deren alternative Verwendung als Zweischichtempfänger ermöglicht, so dass für unterschiedliche Anwendungen nicht unterschiedliche Typen von Detektoranordnungen produziert werden müssen. Die Ausgleichskammern 12, 13 des ersten und des zweiten Einschichtempfängers 8, 9 sind über eine verschließbare Kapillare 23 miteinander verbunden. Die Kapillare 23 ist derart bemessen, dass sie als pneumatischer Tiefpass wirkt und die durch die Modulation der Strahlung 3 in den Einschichtempfängern 8, 9 hervorgerufenen Druckänderungen nicht zwischen den Ausgleichskammern 12, 13 überträgt.

Beim erfindungsgemäßen Gebrauch der Detektoranordnung 7 ist die Kapillare 23 verschlossen und die Einschichtempfänger 8, 9 werden getrennt über Gasanschlüsse 24, 25, 26, 27 mit unterschiedlichen Gasen bzw. unterschiedlichen Gaskonzentrationen gefüllt. Der Verschluss 28 der Kapillare 23 kann über ein stellbares Ventil oder bei der Herstellung der Detektoranordnung durch Klebstoff oder Verschmelzen der Kapillare 23 erfolgen.

Bei Verwendung der Detektoranordnung 7 als Zweischichtdetektor ist die Kapillare 23 geöffnet, so dass beide Hälften 8, 9 des Zweischichtdetektors in einem einzigen Füllschritt mit dem Gas gefüllt werden können. Wenn aufgrund unterschiedlicher Leckraten der Gasaustritt über längere Zeit aus beiden Hälften 8, 9 des Zweischichtdetektors unterschiedlich ist, kommt es über die Kapillare 23 zu einem Druck- und Konzentrationsausgleich zwischen beiden Hälften 8, 9 des Zweischichtdetektors, wodurch der Messfehler minimiert wird. Da die Kapillare 23 als pneumatischer Tiefpass wirkt, werden die messtechnischen periodischen Druckänderungen nicht zwischen den beiden Hälften 8, 9 des Zweischichtdetektors übertragen.

Wie Figur 4 weiter zeigt, weisen die aktiven Detektorkammern 10, 11 Fenster 29 zum Einlass der Strahlung 3 auf. Anstelle eines Austrittsfensters kann zum Abschluss der letzten Detektorkammer 11 ein Spiegel 31 vorgesehen werden, um so die optisch wirksame Länge der letzten Detektorkammer 11 zu vergrößern, jedoch kann auch ein Fenster vorgesehen werden, um einen weiteren Zweischichtdetektor hinter dem ersten anzuordnen.

## Patentansprüche

1. Detektoranordnung (7) für einen nichtdispersiven Infrarot(NDIR-)Gasanalysator (1, 1') zum Nachweis einer Messgaskomponente in einem in eine Messküvette (4) des Gasanalysators (1, 1') eingeleiteten Gasgemisch (5), mit einem ersten Einschichtempfänger (8) und mindestens einem weiteren Einschichtempfänger (9), die hintereinander im Strahlengang (3) des Gasanalysators (1, 1') liegen, wobei der erste Einschichtempfänger (8) die Messgaskomponente oder ein sich spektral mit der Messgaskomponente überlagerndes Gas und der mindestens eine weitere Einschichtempfänger (9) ein Quergas, die Messgaskomponente oder ein sich spektral mit der Messgaskomponente überlagerndes Gas enthält, und mit einer Auswerteeinrichtung (18) zur Ermittlung der Konzentration der Messgaskomponente in dem Gasgemisch (5) aus von Sensoren (16, 17) der Einschichtempfänger (8, 9) gelieferten Signalen (S1, S2), **dadurch gekennzeichnet, dass** die Auswerteeinrichtung (18) eine entsprechend der Anzahl n der Einschichtempfänger (8, 9) n-dimensionale Kalibrationsmatrix (32) enthält, in der bei unterschiedlichen bekannten Konzentrationen der Messgaskomponente in Anwesenheit von unterschiedlichen bekannten Quergaskonzentrationen in der Messküvette (4) erhaltene Signalwerte (S1, S2) der Sensoren (16, 17) als n-Tupel (33) abgespeichert sind, und dass die Auswerteeinrichtung (18) dazu ausgebildet ist, beim Messen von unbekannten Konzentrationen der Messgaskomponente in Anwesenheit von unbekannten Quergaskonzentrationen durch Vergleich der dabei erhaltenen n-Tupel (33) von Signalwerten (S1, S2) mit den in der Kalibrationsmatrix (32) abgespeicherten n-Tupeln (33) von Signalwerten (S1, S2) die Konzentration der Messgaskomponente zu ermitteln.

2. Detektoranordnung nach Anspruch 1, **dadurch gekennzeichnet, dass** die Einschichtempfänger (8, 9) jeweils eine im Strahlengang (3) des Gasanalysators (1, 1') liegende aktive Detektorkammer (10, 11) und außerhalb des Strahlengangs (3) eine passive Ausgleichskammer (12, 13) aufweisen, die über eine Verbindungsleitung (14, 15) mit dem darin angeordneten druck- oder strömungsempfindlichen Sensor (16, 17) miteinander verbunden sind.

3. Detektoranordnung nach Anspruch 2, **dadurch gekennzeichnet, dass** zu ihrer alternativen Verwendung als Zweischichtempfänger die Ausgleichskammern (12, 13) des ersten und des weiteren Einschichtempfängers (8, 9) über eine verschließbare Kapillare (23) miteinander verbunden sind.

4. Verfahren zum Nachweis einer Messgaskomponente in einem in eine Messküvette (4) des Gasanalysators (1, 1') eingeleiteten Gasgemisch (5) mittels eines nichtdispersiven Infrarot-(NDIR-) Gasanalysators (1, 1,') unter Verwendung einer Detektoranordnung (7) mit einem ersten Einschichtempfänger (8) und mindestens einem weiteren Einschichtempfänger (9), die hintereinander im Strahlengang (3) des Gasanalysators (1, 1') liegen, wobei der erste Einschichtempfänger (8) die Messgaskomponente oder ein sich spektral mit der Messgaskomponente überlagerndes Gas und der mindestens eine weitere Einschichtempfänger (9) ein Quergas, die Messgaskomponente oder ein sich spektral mit der Messgaskomponente überlagerndes Gas enthält, wobei die Konzentration der Messgaskomponente in dem Gasgemisch (5) aus von Sensoren (16, 17) der Einschichtempfänger (8, 9) gelieferten Signalen (S1, S2) ermittelt wird, **dadurch gekennzeichnet, dass** eine entsprechend der Anzahl n der Einschichtempfänger (8, 9) n-dimensionale Kalibrationsmatrix (32) verwendet wird, in der bei unterschiedlichen bekannten Konzentrationen der Messgaskomponente in Anwesenheit von unterschiedlichen bekannten Quergaskonzentrationen in der Messküvette (4) erhaltene Signalwerte (S1, S2) der Sensoren (16, 17) als n-Tupel (33) abgespeichert sind, und dass beim Messen von unbekannten Konzentrationen der Messgaskompanente in Anwesenheit von unbekannten QuergasKonzentrationen durch Vergleich des dabei erhaltenen n-Tupel (33) von Signalwerten (S1, S2) mit den in der Kalibrationsmatrix (32) abgespeicherten n-Tupeln (33) von Signalwerten (S1, S2) die Konzentration der Messgaskomponente ermittelt wird.

5. Verfahren nach Anspruch 4, **dadurch gekennzeichnet, dass** der mindestens eine weitere Einschichtempfänger (9) mit einem Quergas oder der Messgaskomponente oder einem Gas, welches sich spektral mit dem zu messenden Gas überlagert, gefüllt ist und dass beim Messen von unbekannten Konzentrationen der Messgaskomponente in Anwesenheit von unbekannten QuergasKonzentrationen durch Vergleich der dabei erhaltenen n-Tupel (33) von Signalwerten (S1, S2) mit den in der Kalibrationsmatrix (32) abgespeicherten n-Tupeln (33) von Signalwerten (S1, S2) die Konzentration der jeweiligen Quergaskomponente ermittelt wird.

6. Verfahren nach Anspruch 4 oder 5, **dadurch gekennzeichnet, dass** ausgehend von zu erwartenden Quergaskonzentrationen und deren Schwankungsbreiten ein Korridors (34) in der Kalibrationsmatrix (32) festgelegt wird und dass beim Messen von unbekannten Konzentrationen der Messgaskomponente in Anwesenheit der zu erwartenden Quergaskonzentrationan ein Fehler signalisiert wird, wenn die dabei erhaltenen n-Tupel (33) von Signalwerten (S1, S2) außerhalb des Korridors (34) liegen.

7. Verfahren nach Anspruch 4, 5 oder 6, **dadurch gekennzeichnet, dass** der Einfluss eines mess- und/oder gerätespezifischen Parameters auf die Messung ermittelt wird, indem bei Konstanthaltung der Konzentrationen der Messgaskomponente und Quergase in der Messküvette (4) der mess- und/oder gerätespezifische Parameter variiert wird und dabei die Richtung (35, 36, 37, 38) ermittelt wird, in der die n-Tupel der erhaltenen Signalwerte (S1, S2) innerhalb der Kalibrationsmatrix (32) variieren.

8. verfahren nach Anspruch 6 und 7, **dadurch gekennzeichnet, dass** beim Messen von unbekannten Konzentrationen der Messgaskomponente in der Messküvette (4) im Falle einer Bewegung der dabei erhaltenen n-Tupel (33) von Signalwerten (S1, S2) aus dem Korridor (34) heraus der zu der Bewegungsrichtung (37, 38) der n-Tupel (33) zugehorige mess- und/oder gerätespezifische Parameter ermittelt wird.

## Claims

1. Detector arrangement (7) for a non-dispersive infrared (NDIR) gas analyzer (1, 1') for detecting a measuring gas component in a gas mixture (5) introduced into a measuring cell (4) of the gas analyzer (1, 1'), comprising a first single-layer receiver (8) and at least one further single-layer receiver (9), which lie one behind the other in the beam path (3) of the gas analyzer (1, 1'), the first single-layer receiver (8) containing the measuring gas component or a gas spectrally overlaying the measuring gas component and the at least one further single-layer receiver (9) containing a transverse gas, the measuring gas component or a gas spectrally overlaying the measuring gas component, and comprising an evaluating device (18) for determining the concentration of the measuring gas component in the gas mixture (5) from signals (S1, S2) supplied by sensors (16, 17) of the single-layer receivers (8, 9), **characterized in that** the evaluating device (18) includes an n-dimensional calibration matrix (32) corresponding to the number n of single-layer receivers (8, 9), in which signal values (S1, S2) from the sensors (16, 17) obtained in the case of different known concentrations of the measuring gas component in the presence of different known transverse gas concentrations in the measuring cell (4) are stored as n-tuples (33), and **in that** the evaluating device (18) is designed to determine the concentration of the measuring gas component when measuring unknown concentrations of the measuring gas component in the presence of unknown transverse gas concentrations by comparing the n-tuples (33) of signal values (S1, S2) thereby obtained with the n-tuples (33) of signal values (S1, S2) stored in the calibration matrix (32).

2. Detector arrangement according to Claim 1, **characterized in that** the single-layer receivers (8, 9) respectively have an active detector chamber (10, 11) lying in the beam path (3) of the gas analyzer (1, 1') and a passive compensating chamber (12, 13) outside the beam path (3), which are connected to one another by way of a connecting line (14, 15) with the pressure- or flow-sensitive sensor (16, 17) arranged therein.

3. Detector arrangement according to Claim 2, **characterized in that**, for their alternative use as two-layer receivers, the compensating chambers (12, 13) of the first and the further single-layer receiver (8, 9) are connected to one another by way of a closable capillary (23).

4. Method for detecting a measuring gas component in a gas mixture (5) introduced into a measuring cell (4) of the gas analyzer (1, 1') by means of a non-dispersive infrared (NDIR) gas analyzer (1, 1') and using a detector arrangement (7) comprising a first single-layer receiver (8) and at least one further single-layer receiver (9), which lie one behind the other in the beam path (3) of the gas analyzer (1, 1'), the first single-layer receiver (8) containing the measuring gas component or a gas spectrally overlaying the measuring gas component and the at least one further single-layer receiver (9) containing a transverse gas, the measuring gas component or a gas spectrally overlaying the measuring gas component, the concentration of the measuring gas component in the gas mixture (5) being determined from signals (S1, S2) supplied by sensors (16, 17) of the single-layer receivers (8, 9), **characterized in that** an n-dimensional calibration matrix (32) corresponding to the number n of single-layer receivers (8, 9) is used, in which signal values (S1, S2) from the sensors (16, 17) obtained in the case of different known concentrations of the measuring gas component in the presence of different known transverse gas concentrations in the measuring cell (4) are stored as n-tuples (33), and **in that**, when measuring unknown concentrations of the measuring gas component in the presence of unknown transverse gas concentrations, the concentration of the measuring gas component is determined by comparing the n-tuples (33) of signal values (S1, S2) thereby obtained with the n-tuples (33) of signal values (S1, S2) stored in the calibration matrix (32).

5. Method according to Claim 4, **characterized in that** the at least one further single-layer receiver (9) is filled with a transverse gas or the measuring gas component or a gas spectrally overlaying the gas to be measured and **in that**, when measuring unknown concentrations of the measuring gas component in the presence of unknown transverse gas concentrations, the concentration of the respective transverse gas component is determined by comparing the n-tuples (33) of signal values (S1, S2) thereby obtained with the n-tuples (33) of signal values (S1, S2) stored in the calibration matrix (32).

6. Method according to Claim 4 or 5, **characterized in that**, starting from likely transverse gas concentrations and their ranges of variation, a corridor (34) is established in the calibration matrix (32) and **in that**, when measuring unknown concentrations of the measuring gas component in the presence of the likely transverse gas concentrations, an error is signaled if the n-tuples (33) of signal values (S1, S2) thereby obtained lie outside the corridor (34).

7. Method according to Claim 4, 5 or 6, **characterized in that** the influence of a measuring- and/or device-specific parameter on the measurement is determined by varying the measuring- and/or device-specific parameter while keeping the concentrations of the measuring gas component and transverse gases in the measuring cell (4) constant, and at the same time determining the direction (35, 36, 37, 38) in which the n-tuples of the signal values (S1, S2) obtained vary within the calibration matrix (32).

8. Method according to Claims 6 and 7, **characterized in that**, when measuring unknown concentrations of the measuring gas component in the measuring cell (4), in the case of a movement of the n-tuples (33) of signal values (S1, S2) thereby obtained out of the corridor (34), the measuringand/or device-specific parameter associated with the direction of movement (37, 38) of the n-tuples (33) is determined.

## Revendications

1. Agencement (7) formant détecteur pour un analyseur (1, 1') de gaz à infrarouge non dispersible (NDIR), afin de déceler un constituant gazeux à mesurer dans un mélange (5) gazeux introduit dans une cuvette (6) de mesure de l'analyseur (1, 1') de gaz, comprenant un premier récepteur (8) à une seule couche et au moins un autre récepteur (9) à une seule couche, qui sont l'un derrière l'autre dans le chemin (3) de rayonnement de l'analyseur (1, 1') de gaz, le premier récepteur (8) à une seule couche contenant le constituant gazeux à mesurer ou un gaz se superposant spectralement au constituant gazeux à mesurer et le au moins un autre récepteur (9) à une seule couche un gaz transversal, le constituant gazeux à mesurer ou un gaz se superposant spectralement au constituant gazeux à mesurer, et comprenant un dispositif (18) d'évaluation pour la détermination de la concentration du constituant gazeux à mesurer dans le mélange (5) gazeux à partir de signaux (S1, S2) fournis par des capteurs (16, 17) des récepteurs (8, 9) à une seule couche, **caractérisé en ce que** le dispositif (18) d'évaluation contient une matrice (32) d'étalonnage à une dimension correspondant au nombre n des récepteurs (8, 9) à une seule couche, matrice dans laquelle sont mémorisées sous la forme de n-tuples (33) des valeurs (S1, S2) de signal des capteurs (16, 17) obtenues dans la cuvette (4) de mesure en présence de concentrations de gaz transversal connues différentes pour des concentrations connues différentes du constituant gazeux à mesurer et **en ce que** le dispositif (18) d'évaluation est constitué pour déterminer, lors de la mesure de concentrations inconnues du constituant gazeux à mesurer en la présence de concentrations de gaz transversal inconnues, par comparaison des n-tuples (33) ainsi obtenues des valeurs (S1, S2) du signal avec les n-tuples (33) mémorisées dans la matrice (32) d'étalonnage de valeurs (S1, S2) de signal, la concentration du constituant gazeux à mesurer.

2. Agencement formant détecteur suivant la revendication 1, **caractérisé en ce que** les récepteurs (8, 9) à une seule couche ont respectivement une chambre (10, 11) active de détecteur se trouvant dans le chemin (3) du rayonnement de l'analyseur (1, 1') de gaz et une chambre (12, 13) passive de comparaison se trouvant à l'extérieur du chemin (3) du rayonnement, chambres qui communiquent entre elles par un conduit (14, 15) de liaison ayant le capteur (16, 17) sensible à la pression ou sensible au courant, qui y est monté.

3. Agencement formant détecteur suivant la revendication 2, **caractérisé en ce que**, pour leur utilisation possible comme récepteur à deux couches, les chambres (12, 13) de compensation du premier et de l'autre récepteurs (8, 9) à une seule couche communiquent entre elles par des tubes (23) capillaires pouvant être fermés.

4. Procédé pour déceler un constituant gazeux à mesurer dans un mélange (5) gazeux introduit dans une cuvette (4) de mesure de l'analyseur (1, 1') de gaz au moyen d'un analyseur (1, 1') de gaz à infrarouge non dispersible (NDIR) en utilisant un agencement (7) formant détecteur ayant un premier récepteur (8) à une seule couche et au moins un autre récepteur (9) à une seule couche, qui sont l'un derrière l'autre dans le chemin (3) du rayonnement de l'analyseur (1, 1') de gaz, le premier récepteur (8) à une seule couche contenant le constituant gazeux à mesurer ou un gaz se superposant spectralement au constituant gazeux à mesurer et le au moins un autre récepteur (9) à une seule couche un gaz transversal, le constituant gazeux à mesurer ou un gaz se superposant spectralement au constituant gazeux à mesurer, la concentration du constituant gazeux à mesurer dans le mélange (5) gazeux étant déterminée à partir de signaux (S1, S2) fournis par des capteurs (16, 17) des récepteurs (8, 9) à une seule couche, **caractérisé en ce qu'**on utilise une matrice (32) d'étalonnage à n dimension correspondant au nombre n des récepteurs (8, 9) à une seule couche, matrice dans laquelle sont mémorisées sous forme de n-tuple (33) des valeurs (S1, S2) du signal des capteurs (16, 17) obtenues dans la cuvette (4) de mesure en présence de concentrations de gaz transversal connues différentes pour des concentrations connues différentes du constituant gazeux à mesurer et **en ce que**, lors de la mesure de concentrations inconnues du constituant gazeux à mesurer en présence de concentrations de gaz transversal inconnues, on détermine, par comparaison du n-tuples (33) ainsi obtenues de valeurs (S1, S2) de signal avec les n-tuples (33) mémorisées dans la matrice (32) d'étalonnage de valeurs (S1, S2) du signal, la concentration du constituant gazeux à mesurer.

5. Procédé suivant la revendication 4, **caractérisé en ce que** le au moins un autre récepteur (9) à une seule couche est empli d'un gaz transversal ou du constituant gazeux à mesurer ou d'un gaz qui se superpose spectralement au gaz à mesurer et **en ce que**, lors de la mesure de concentrations inconnues du constituant gazeux à mesurer en présence de concentrations de gaz transversal inconnues, on détermine, par comparaison des n-tuples (33) ainsi obtenues de valeurs (S1, S2) de signal avec les n-tuples (33) mémorisées dans la matrice (32) d'étalonnage de valeurs (S1, S2) de signal, la concentration du constituant gazeux transversal.

6. Procédé suivant la revendication 4 ou 5, **caractérisé en ce que**, à partir de concentrations escomptées de gaz transversal et de leurs largeurs de fluctuation, on fixe un corridor (34) dans la matrice (32) d'étalonnage et **en ce que**, lors de la mesure de concentrations inconnues du constituant gazeux à mesurer en présence des concentrations de gaz transversal escomptées, on signale une erreur si les n-tuples (33) ainsi obtenues de valeurs (S1, S2) de signal se trouvent en-dehors du corridor (34).

7. Procédé suivant la revendication 4, 5 ou 6, **caractérisé en ce qu'**on détermine l'influence sur la mesure d'un paramètre spécifique à la mesure et/ou spécifique à l'appareil en faisant varier, tout en maintenant constantes des concentrations du constituant gazeux à mesurer et des gaz transversaux dans la cuvette (4) de mesure, le paramètre spécifique à la mesure et/ou à l'appareil et on détermine ainsi la direction (35, 36, 37, 38), dans laquelle les n-tuples des valeurs (S1, S2) du signal obtenues varie à l'intérieur de la matrice (32) d'étalonnage.

8. Procédé suivant les revendications 6 et 7, **caractérisé en ce que**, lors de la mesure de concentrations inconnues du constituant gazeux à mesurer dans la cuvette (4) de mesure, dans le cas d'un déplacement des n-tuples (33) ainsi obtenues de valeurs (S1, S2) de signal hors du corridor (34), on détermine le paramètre spécifique à la mesure et/ou à l'appareil associé à la direction (37, 38) de déplacement des n-tuples (33).
